(19)

Europäisches
Patentamt
European
Patent Office
Office européen
des brevets

(11) **EP 3 846 126 A1**

(12) **EUROPEAN PATENT APPLICATION**
published in accordance with Art. 153(4) EPC

(43) Date of publication:
**07.07.2021 Bulletin 2021/27**

(51) Int Cl.:
***G06T 7/60*** (2017.01)

(21) Application number: **18931884.3**

(22) Date of filing: **28.11.2018**

(86) International application number:
**PCT/CN2018/117917**

(87) International publication number:
**WO 2020/042405 (05.03.2020 Gazette 2020/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(30) Priority: **31.08.2018   CN 201811013852**

(71) Applicant: **Fuzhou Yiying Health Technology Co.,
Ltd.
Minhou Fuzhou, 350100 (CN)**

(72) Inventors:
• **YU, Lun
Fuzhou, Fujian 350100 (CN)**

• **QIU, Yingqiang
Fuzhou, Fujian 350100 (CN)**
• **LIN, Jlawen
Fuzhou, Fujian 350100 (CN)**
• **CAO, Xinrong
Fuzhou, Fujian 350100 (CN)**
• **WANG, Lina
Fuzhou, Fujian 350100 (CN)**

(74) Representative: **Gong, Jinping
CocreateIP
Eggenfeldenerstraße 56
81929 München (DE)**

(54) **PREPROCESSING METHOD FOR PERFORMING QUANTITATIVE ANALYSIS ON FUNDUS IMAGE, AND STORAGE DEVICE**

(57)    The present invention relates to fundus image processing field, especially a preprocessing method for quantitative analysis of fundus image, and storage device. A preprocessing method for quantitative analysis of fundus image, wherein the step includes, acquiring a to-be-processed fundus image; performing optic disk positioning on the to-be-processed fundus image; performing macular fovea positioning on the to-be-processed image; and calculating a quantization parameter of a distance between a center of the macular fovea and a bitamporal edge of the optic disk. Through this method, the data obtained is converted from absolute representation to relative representation, and through normalization, a meaningful and comparable quantification is formed between people, between different people, and even between inspection results of different instruments. analyze data. It ensures that fundus images from different sources can form meaningful and comparable quantitative indicators.

acquiring a to-be-processed fundus image
S101

performing optic disk positioning on the to-be-processed fundus image
S102

performing macular fovea positioning on the to-be-processed image
S103

calculating a quantization parameter of a distance between a center of the macular fovea and a bitamporal edge of the optic disk
S104

FIG.1

EP 3 846 126 A1

## Description

### Technical field

The present invention relates to fundus image processing field, especially a preprocessing method for quantitative analysis of fundus image, and storage device.

### Background

Chronic diseases such as diabetes and hypertension have become serious social problems that endanger the health of the people and affect the quality of life. How to find a suitable way to realize the management of one's own health, so as to realize the prevention, monitoring and treatment of diseases is an inevitable requirement of the development of today's society. The fundus is the only non-invasive part of the human body where arteries, veins and capillaries can be directly observed. A large number of studies and clinical practices have shown that retinopathy, retinal vascular changes, and the condition and changes of the optic nerve head reflect to a certain extent People's health and the condition of atherosclerotic diseases caused by diabetic retinopathy and high blood pressure.

However, due to different types of fundus cameras and their different working modes, camera viewing angles, and fixation points, the relative size, resolution, viewing angle, and fixation point structure of the obtained fundus images are different. Even if the same eye of the same subject is collected by different equipment or at different times, the fundus images obtained may be different due to different viewing angles and resolutions, which may make it impossible to achieve the comparison and index quantification of multiple examination images by individuals. Analysis, it is also difficult to quantitatively analyze, count or compare the retinopathy features, location, size, or blood vessel changes of fundus images collected by different people or the same person at different times or on different devices. At present, no relevant literature has noticed these problems or clearly pointed out how to solve this problem! Therefore, how to form comparable and meaningful quantitative indicators for the fundus images that are regularly screened and collected by a large number of subjects is very important.

### SUMMARY

Therefore, it is necessary to provide a preprocessing method for quantitative analysis of a fundus image so as to solve the problem that it is impossible to quantitatively analyze comparison and indexity of the fundus images acquired by examination on one people for many times or examination on different people due to the various acquired fundus images. The present invention is implemented by the specific technical solution as follows:
A preprocessing method for quantitative analysis of a fundus image includes the steps: acquiring a to-be-processed fundus image; performing optic disk positioning on the to-be-processed fundus image; performing macular fovea positioning on the to-be-processed image; and calculating a quantization parameter of a distance between a center of the macular fovea and a bitamporal edge of the optic disk.

Further,The "performing optic disk positioning on the to-be-processed fundus image" further includes the steps: preprocessing the fundus image, wherein the preprocessing includes: green channel selection, median filtering, limited contrast enhancement and normalization processing of gray scale; extracting a binary vascular image from the preprocessed fundus image by an otsu algorithm and corroding the binary vascular image by a morphological method to obtain a main blood vessel; and performing parabolic fitting calculation on the main blood vessel, and positioning the center of the optic disk and delineating the edge of the optical disk according to the calculation result.

Further,The "performing macular fovea positioning on the to-be-processed image" further includes the steps: constructing a circle by taking the center of the optic disk as the center of the circle and by using a preset radius value and a second preset radius value to form an annular area; and performing macular fovea positioning in the annular area according to the brightness feature of macula.

Further,The "calculating a quantization parameter of a distance between a center of the macular fovea and a bitamporal edge of the optic disk"further includes the steps: according to the coordinates of the center of the optic disk and the coordinates of the macular fovea, determining whether the fundus image is a fundus image of a left eye or a right eye; according to the coordinates of the center of the optic disk, the radius of the optic disk and the delineated edge of the optic disk, acquiring the coordinates of each point of the bitamporal edge of the optic disk as well as each pixel point in the area of the optic disk and a gravity center or a center point of the optic disk; according to a connecting line from the gravity center or center point of the optic disk to the coordinates of the center point of the macular fovea and the coordinates of bitamporal edge points of the optic disk on the line, calculating or acquiring an absolute distance between the bitamporal of the optic disk and the center of the macular fovea; and according to the absolute distance and a diameter of the optic disk, calculating the quantization parameter.

Further,The first preset radius value is twice the radius of the optic disk, and the second preset radius value is three times the radius of the optic disk.

To solve the above problem, a storage device is provided. The specific technical solution is as follows:

A storage device stores an instruction set. The instruction set is configured to perform: acquiring a to-be-processed fundus image; performing optic disk positioning on the to-be-processed fundus image; performing macular fovea positioning on the to-be-processed image; and calculating a quantization parameter of a distance between a center of the macular fovea and a bitamporal edge of the optic disk.

Further,The instruction set is further configured to perform: the"performing optic disk positioning on the to-be-processed fundus image" further includes the steps: preprocessing the fundus image, wherein the preprocessing includes: green channel selection, median filtering, limited contrast enhancement and normalization processing of gray scale; extracting a binary vascular image from the preprocessed fundus image by an otsu algorithm and corroding the binary vascular image by a morphological method to obtain a main blood vessel; and performing parabolic fitting calculation on the main blood vessel, and positioning the center of the optic disk and delineating the edge of the optical disk according to the calculation result.

Further,The instruction set is further configured to perform: the "performing macular fovea positioning on the to-be-processed image" further includes the steps: constructing a circle by taking the center of the optic disk as the center of the circle and by using a preset radius value and a second preset radius value to form an annular area; and performing macular fovea positioning in the annular area according to the brightness feature of macula.

Further,The instruction set is further configured to perform: the"calculating a quantization parameter of a distance between a center of the macular fovea and a bitamporal edge of the optic disk"further includes the steps: according to the coordinates of the center of the optic disk and the coordinates of the macular fovea, determining whether the fundus image is a fundus image of a left eye or a right eye; according to the coordinates of the center of the optic disk, the radius of the optic disk and the delineated edge of the optic disk, acquiring the coordinates of each point of the bitamporal edge of the optic disk as well as each pixel point in the area of the optic disk and a gravity center or a center point of the optic disk; according to a connecting line from the gravity center or center point of the optic disk to the coordinates of the center point of the macular fovea and the coordinates of bitamporal edge points of the optic disk on the line, calculating or acquiring an absolute distance between the bitamporal of the optic disk and the center of the macular fovea; and according to the absolute distance and a diameter of the optic disk, calculating the quantization parameter.

Further,The instruction set is further configured to perform: the first preset radius value is twice the radius of the optic disk, and the second preset radius value is three times the radius of the optic disk.

The present invention has the following beneficial effects: the position and the boundary point of the optic disk and the position of the center point of the macular fovea of the to-be-processed fundus image are determined by acquiring the to-be-processed fundus image. The quantization parameter of the optic disk and the macular fovea is calculated. The quantization parameter includes the absolute distance between the bitamporal of the optic disk and the center of the macular fovea. Since the absolute distance value between the bitamporal of the optic disk and the center of the macular fovea of normal people is almost the same, the absolute distance value may be expressed quantitatively with mm number. Therefore, parameters of the subsequent quantitative analysis are acquired according to the acquired absolute distance between the bitamporal of the optic disk and the center of the macular fovea. The acquired data is converted from an absolute representation mode into a relative representation mode. meaningful and comparable data is formed through normalization processing. It is ensured that the fundus images from different sources (the fundus images of different people or the same person in different periods) may form meaningful and comparable quantitative indicators, so that all fundus images are basically comparable and are favorable for feature extraction and comparison of the fundus images acquired by examining different people at different times, even with different cameras, or the same person at different times, even with different cameras, thereby analyzing and determining fundus health through the quantitative indicators to realize quantitative analysis.

## BRIEF DESCRIPTION OF DRAWINGS

FIG. 1 is a flowchart of a pre-processing method for quantitative analysis of fundus images according to the specific embodiment;

Fig. 2 is a schematic diagram of modules of a storage device according to a specific embodiment.

Description of reference signs:

200. Storage device.

## DETAILED DESCRIPTION OF EMBODIMENTS

To describe the technical contents, the structural features, the achieved objective and effect in detail, the following id described in detail with reference to the specific embodiments and the accompanying drawings.

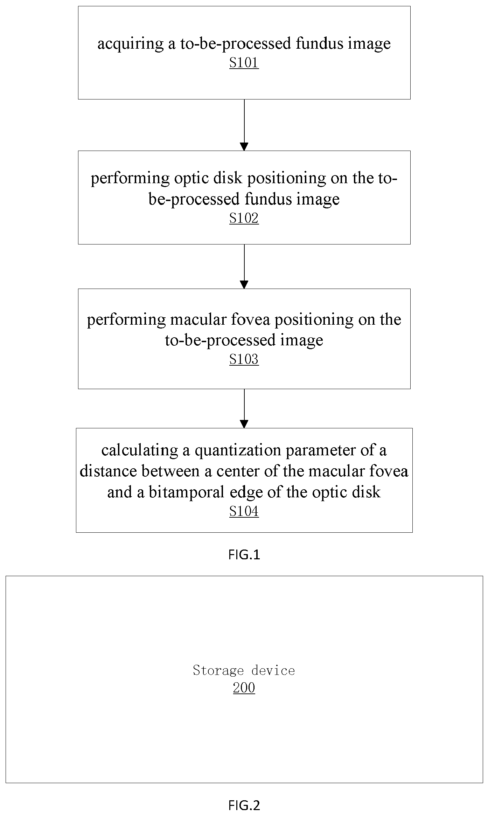

Referring to FIG. 1, some terms in this embodiment are explained as follows:

Optic disk: the full name is discus nervi optici, also called papilla of optic nerve. There is a light red disk-like structure with a diameter about 1.5 mm and a clear boundary at about 3 mm from the macula of retina to the nose, called discus nervi optici, or optic disk for short.

Macula lutea: at a distance of 0.35 cm from and slightly below the bitamporal of the optic disk and located at an optical center area of human eyes, is a projection point of a visual axis. The macular area is rich in lutein and is darker than the surrounding retina. A depression in the center of the macula lutea is called central fovea, which is a place with the sharpest vision.

An otsu algorithm: also called a maximum between-cluster variance method, also called: OTSU, which is an efficient algorithm for binarizing images proposed by Japanese scholar OTSU in 1979. The original image is divided into foreground and background images mainly by a threshold. Foreground: n1, csum and m1 are configured to represent the number of points, mass moment and average gray scale of the foreground under the current threshold. Background: n2, sum-csum and m2 are configured to represent the number of points, mass moment and average gray scale of the background under the current threshold. The background should be the most different from the background. The key lies in how to choose the standard to measure the difference. In the otsu algorithm, the standard of measuring the difference is the maximum between-cluster variance. In the program, the between-cluster variance is expressed by sb and the maximum between-cluster variance is expressed by fmax.

Corrosion operation in morphological operation: corrosion is a process of eliminating boundary points and shrinking the boundary inward, and may be used to eliminate small and meaningless objects. Algorithm of corrosion: a structural element for each pixel of the image is scanned by a structural element of 3x3. The structural element and a binary image covered with the structural element are subjected to "and" operation. If both are 1, the pixel of the result image is 1. Otherwise, it is 0. Result: the binary image is reduced by one circle.

In the embodiment, a preprocessing method for quantitative analysis of a fundus image may be applied to a storage device. In the embodiment, a storage device may be a smart phone, a tablet computer, a desktop PC, a notebook computer, a PDA, etc.

In the embodiment, a preprocessing method for quantitative analysis of the fundus image is specifically implemented as follows:

step S101: a to-be-processed fundus image is acquired. The step S101 may adopt the following method: a fundus image uploaded locally is acquired, or a fundus image uploaded by a remote fundus image acquisition terminal is acquired, or a fundus image is acquired from a server, specifically, a fundus image of an examineeis acquired by a fundus camera, the fundus image corresponding to the examinee is uploaded to a storage device for processing, or a fundus image of an examineemay be directly input, or fundus images of different subjects may be acquired through the cloud, wherein there are various ways to acquire the fundus images without any restrictions.

After the to-be-processed fundus image is acquired, the step S102 is performed: the to-be-processed fundus image is subjected to optic disk positioning. The step S102 may adopt the following method: the fundus image is preprocessed, wherein the preprocessing includes: green channel selection, median filtering, limited contrast enhancement and normalization processing of gray scale; a binary vascular image is extracted from the preprocessed fundus image by an otsu algorithm and the binary vascular image is corroded by a morphological method to obtain a main blood vessel; and the main blood vessel is subjected to parabolic fitting calculation, and the center of the optic disk is positioned and the edge of the optical disk is delineated according to the calculation result

The to-be-examined fundus image is subjected to green channel selection, median filtering, limited contrast enhancement and normalization processing of gray scale. By preprocessing the fundus image, the redundant background in the fundus image may be removed and the noise may be effectively removed, which is more beneficial to the subsequent fundus image analysis. In any color fundus image, under a blue channel, there is more noise and useful information is basically lost; and under a red channel, two spots are more prominent and information such as dark hemangioma, hemangioma capillanisum and the like are more lost. Therefore, in the embodiment, a green channel is selected for the to-be-examined color fundus image, thereby retaining and highlighting the fundus blood vessels maximally.

To remove the noise and retain the boundary information well, in this embodiment, the fundus image under the green channel is subjected to median filtering to remove noise.

To achieve better blood vessel extraction effect, the denoised image is subjected to contrast enhancement. In this embodiment, a limited contrast enhancement method CLAHE is used to avoid over-brightness after image enhancement. Finally, normalization processing is performed, so that pixel values of all pixel points in one image fall between 0 and 1.

A binary vascular image is extracted from the preprocessed fundus image by an otsu algorithm and the binary vascular image is corroded by a morphological method to obtain a main blood vessel, which may adopt the following method: a threshold of the preprocessed fundus image is calculated by the otsu method, and a pixel with a grayscale greater than the threshold is identified as a blood vessel according to the following formula; and

$$Map_v(i,j) = \begin{cases} 1, & \text{if } Gv(i,j) > T \\ 0, & \text{otherwise} \end{cases}$$

a structural element is constructed according to a diameter of the optic disk being 1/8 to 1/5 of a width of the image and a width of the main blood vessel being 1/4 of the diameter of the optic disk, and the extracted blood vessel is subjected to corrosion operation by the structural element to remove fine blood vessels to obtain the main blood vessel.

After the main blood vessel is obtained, the main blood vessel is subjected to parabolic fitting calculation, and a center of the optic disk is positioned according to the calculation result, which may adopt the following method: a coordinate system is established with the upper left corner of the fundus image as an original point, a horizontal direction as an X axis and a vertical direction as a Y axis;

each pixel point in the main blood vessel is mapped as coordinates of the coordinate system;

as shown in the following formula, the main blood vessel is subjected to parabolic fitting according to a least square method, parameters of the parabola are determined, and a vertex of the parabola is calculated; and

$$f(x) = ax^2 + bx + c$$

$$S(a,b,c) = \sum_{i=1}^{N} |f(x_i) - y_i|^2$$

whether the vertex of the parabola falls in the original fundus image is determined, if the vertex of the parabola falls in the original fundus image, the vertex of the parabola is defined as the center of the optic disk, the coordinates are (ODXX, ODYY), and the edge of the optic disk is delineated, so that the diameter of the optic disk is acquired automatically or semi-automatically, and the diameter ODD of the optic disk is described according to the number of the pixels.

After the optic disk is positioned, the step S103 is performed: the to-be-processed fundus image is subjected to macular fovea positioning. The step S103 may adopt the following method: a circle is constructed by taking the center of the optic disk as the center of the circle and by using a preset radius value and a second preset radius value to form an annular area; and the annular area is subjected to macular fovea positioning according to the brightness feature of macula.

According to a position relationship between the macula and the optic disk, a distance between the macular fovea and the center of the optic disk is generally 2 to 3 times the size of ODD. Therefore, in this embodiment, preferably, a first circle is constructed by taking the center of the optic disk as the center of the circle and a size 2 times that of ODD as the radius; a second circle is constructed by taking the center of the optic disk as the center of the circle and a size 3 times that of ODD as the radius; an annular area formed between the two circles is defined as a mask area; and then in the mask area, the fovea is positioned according to the characteristic that the fovea has the lowest brightness to acquire the coordinates MX and MY of the fovea. In a preferred manner, the position of the fovea is detected by a local directional contrast method; and finally, a macular area is fitted circularly with the fovea as a circle center according to the brightness information.

Each pixel point in the candidate area is scanned by a sliding window with a preset size; and

an evaluation formula is constructed according to the fact that the macular area is the darkest area in the fundus image and the macular fovea does not contain any blood vessels, wherein

the evaluation formula is shown as follows:

$$f = \frac{f_{vessel} + f_{intensity}}{2}$$

$f_{vessel}$ is a score value corresponding to the number (not zero) of the blood vessel pixel points in a vascular distribution diagram in any window, and $f_{intensity}$ is a brightness score in any window. In the embodiment, in the fundus image, the darkest part corresponds to the brightness score in the formula, and the part not containing the blood vessels corresponds to the number score of the blood vessel pixel points in the formula.

In the embodiment, each pixel point in the candidate area is scanned by a sliding window with a size being the diameter of the optic disk/4* the diameter of the optic disk/4 (that is, (ODD/4)*(ODD/4)).

In the embodiment, $f_{vessel}$ is acquired by performing normalization processing on the maximum score in all the windows; and

$f_{intensity}$ is acquired by calculating a brightness average value of all the pixel points in the windows and performing normalization processing by 255.

An evaluation value of each sliding window is calculated, and a center pixel point corresponding to the sliding window with the minimum evaluation value is selected as the macular fovea; and a circle is delineated by taking the macular fovea as a circle center and the diameter of the optic disk as a diameter, and an area surrounded by the circle is set as a macular area.

After the center or gravity center of the optic disk, the edge line of the optic disk and the center of the macular fovea are positioned, the step S104 is performed: a quantization parameter of a distance between the center of the macular fovea and the bitamporal edge of the optic disk is calculated. The step S104 may adopt the following method: according to the coordinates of the center of the optic disk and the coordinates of the macular fovea, whether the fundus image is a fundus image of a left eye or a right eye is determined; according to the coordinates of the center of the optic disk, the radius of the optic disk and the delineated edge of the optic disk, the coordinates of each point of the bitamporal edge of the optic disk as well as each pixel point in the area of the optic disk and a gravity center or a center point of the optic disk are acquired; according to a connecting line from the gravity center or center point of the optic disk to the coordinates of the center point of the macular fovea and the coordinates of bitamporal edge points of the optic disk on the line, an absolute distance between the bitamporal of the optic disk and the center of the macular fovea are calculated or acquired; and according to the absolute distance and a diameter of the optic disk, the quantization parameter is calculated.

a. According to the determined coordinates of the center of the optic disk and coordinates of the macular fovea, whether the fundus image is a fundus image of a left eye or a right eye is automatically determined according to the following:

$$flag = \begin{cases} 0, ODXX > MX; \\ 1, ODXX < MX; \end{cases} \qquad \text{Formula 1}$$

wherein flag is a left eye/right eye marker, representing the right eye when it is 0 and representing the left eye when it is 1.

b. The coordinates (ODX, ODY) of the bitamporal of the optic disk are calculated according to the coordinates of the center of the optic disk and the radius of the optic disk; and an absolute distance between the bitamporal of the optic disk and the macular fovea is calculated according to the coordinates of the bitamporal of the optic disk and the coordinates of the macular fovea, and an Euclidean distance between the bitamporal of the optic disk and the macular fovea in the fundus image is calculated according to the following formula to serve as the absolute distance between the bitamporal of the optic disk and the macular fovea in the image:

$$OMD = \sqrt{\left|ODX - MX\right|^2 + \left|ODY - MY\right|^2} \qquad \text{Formula 2}$$

wherein all coordinate values take the pixel of the upper left corner of the fundus image as an original point.

c. The distance between the macular fovea and the bitamporal edge of the optic disk is about 3 mm, so according to the acquired absolute distance between the bitamporal of the optic disk and the macular fovea, a standard d for the subsequent quantitative analysis is acquired according to the following formula:

$$d = DMD - ODD \qquad \text{Formula 3}$$

In this embodiment, the acquired data is converted from an absolute representation mode into a relative representation mode by taking d as a ruler.

In the embodiment, if hard exudation has been detected and an Euclidean distance Di from each hard exudation to the macular fovea has been calculated, normalization processing may be performed according to the formula 1 at this time. Based on this, a standard minimum distance from the hard exudation to the macular fovea in the fundus image is acquired.

$$d_i^{'} = \frac{d_i}{d}$$

Formula 4

Meanwhile, according to the personal information of the examinee of the previously acquired fundus image and the left and right eye information of the picture, the previous fundus image of the same eye of the examinee and the minimum distance from the corresponding hard exudation to the macular fovea may be acquired from the original fundus image, so that two successive examinations may be compared.

The position and the boundary point of the optic disk and the position of the center point of the macular fovea of the to-be-processed fundus image are determined by acquiring the to-be-processed fundus image. The quantization parameter of the optic disk and the macular fovea is calculated. The quantization parameter includes the absolute distance between the bitamporal of the optic disk and the center of the macular fovea. Since the absolute distance value between the bitamporal of the optic disk and the center of the macular fovea of normal people is almost the same, the absolute distance value may be expressed quantitatively with mm number. Therefore, parameters of the subsequent quantitative analysis are acquired according to the acquired absolute distance between the bitamporal of the optic disk and the center of the macular fovea. The acquired data is converted from an absolute representation mode into a relative representation mode. meaningful and comparable data is formed through normalization processing. It is ensured that the fundus images from different sources (the fundus images of different people or the same person in different periods) may form meaningful and comparable quantitative indicators, so that all fundus images are basically comparable and are favorable for feature extraction and comparison of the fundus images acquired by examining different people at different times, even with different cameras, or the same person at different times, even with different cameras, thereby analyzing and determining fundus health through the quantitative indicators to realize quantitative analysis.

Referring to FIG. 2, in the embodiment, a storage device 200 is specifically implemented as follows:
a storage device 200 stores an instruction set. The instruction set is configured to perform: a to-be-processed fundus image is acquired; the to-be-processed fundus image is subjected to optic disk positioning; the to-be-processed image is subjected to macular fovea positioning; and a quantization parameter of a distance between a center of the macular fovea and a bitamporal edge of the optic disk is calculated. The following method may be adopted: a fundus image of an examinee is acquired by a fundus camera, the fundus image corresponding to the examinee is uploaded to the storage device 200 for processing, or a fundus image of an examinee may be directly input, or fundus images of different subjects may be acquired through the cloud, wherein there are various ways to acquire the fundus images without any restrictions.

The instruction set is further configured to perform: the"performing optic disk positioning on the to-be-processed fundus image" further includes the steps: the fundus image is preprocessed, wherein the preprocessing includes: green channel selection, median filtering, limited contrast enhancement and normalization processing of gray scale; a binary vascular image is extracted from the preprocessed fundus image by an otsu algorithm and the binary vascular image is corroded by a morphological method to obtain a main blood vessel; and the main blood vessel is subjected to parabolic fitting calculation, the center of the optic disk is positioned and the edge of the optical disk is delineated according to the calculation result.

The to-be-examined fundus image is subjected to green channel selection, median filtering, limited contrast enhancement and normalization processing of gray scale. by preprocessing the fundus image, the redundant background in the fundus image may be removed and the noise may be effectively removed, which is more beneficial to the subsequent fundus image analysis. In any color fundus image, under a blue channel, there is more noise and useful information is basically lost; and under a red channel, two spots are more prominent and information such as dark hemangioma, hemangioma capillanisum and the like are more lost. Therefore, in the embodiment, a green channel is selected for the to-be-examined color fundus image, thereby retaining and highlighting the fundus blood vessels maximally.

To remove the noise and retain the boundary information well, in this embodiment, the fundus image under the green channel is subjected to median filtering to remove noise.

To achieve better blood vessel extraction effect, the denoised image is subjected to contrast enhancement. In this embodiment, a limited contrast enhancement method CLAHE is used to avoid over-brightness after image enhancement. Finally, normalization processing is performed, so that pixel values of all pixel points in one image fall between 0 and 1.

A binary vascular image is extracted from the preprocessed fundus image by an otsu algorithm and the binary vascular image is corroded by a morphological method to obtain a main blood vessel, The following method may be adopted: a threshold of the preprocessed fundus image is calculated by the otsu method, and a pixel with a grayscale greater than the threshold is identified as a blood vessel according to the following formula; and

$$Map_v(i,j) = \begin{cases} 1, & \text{if } Gv(i,j) > T \\ 0, & \text{otherwise} \end{cases}$$

a structural element is constructed according to a diameter of the optic disk being 1/8 to 1/5 of a width of the image and a width of the main blood vessel being 1/4 of the diameter of the optic disk, and the extracted blood vessel is subjected to corrosion operation by the structural element to remove fine blood vessels to obtain the main blood vessel.

After the main blood vessel is obtained, the main blood vessel is subjected to parabolic fitting calculation, and a center of the optic disk is positioned according to the calculation result, which may adopt the following method: a coordinate system is established with the upper left corner of the fundus image as an original point, a horizontal direction as an X axis and a vertical direction as a Y axis;

each pixel point in the main blood vessel is mapped as coordinates of the coordinate system;

as shown in the following formula, the main blood vessel is subjected to parabolic fitting according to a least square method, parameters of the parabola are determined, and a vertex of the parabola is calculated; and

$$f(x) = ax^2 + bx + c$$

$$S(a,b,c) = \sum_{i=1}^{N} |f(x_i) - y_i|^2$$

whether the vertex of the parabola falls in the original fundus image is determined, if the vertex of the parabola falls in the original fundus image, the vertex of the parabola is defined as the center of the optic disk, the coordinates are (ODXX, ODYY), and the edge of the optic disk is delineated, so that the diameter of the optic disk is acquired automatically or semi-automatically, and the diameter ODD of the optic disk is described according to the number of the pixels.

The instruction set is further configured to perform: the "performing macular fovea positioning on the to-be-processed image" further includes the steps: a circle is constructed by taking the center of the optic disk as the center of the circle and by using a preset radius value and a second preset radius value to form an annular area; and macular fovea positioning is performed in the annular area according to the brightness feature of macula.

According to a position relationship between the macula and the optic disk, a distance between the macular fovea and the center of the optic disk is generally 2 to 3 times the size of ODD. Therefore, in this embodiment, preferably, a first circle is constructed by taking the center of the optic disk as the center of the circle and a size 2 times that of ODD as the radius; a second circle is constructed by taking the center of the optic disk as the center of the circle and a size 3 times that of ODD as the radius; an annular area formed between the two circles is defined as a mask area; and then in the mask area, the fovea is positioned according to the characteristic that the fovea has the lowest brightness to acquire the coordinates MX and MY of the fovea. In a preferred manner, the position of the fovea is detected by a local directional contrast method; and finally, the macular area is fitted circularly with the fovea as a circle center according to the brightness information.

Each pixel point in the candidate area is scanned by a sliding window with a preset size; and

an evaluation formula is constructed according to the fact that the macular area is the darkest area in the fundus image and the macular fovea does not contain any blood vessels, wherein

the evaluation formula is shown as follows:

$$f = \frac{f_{vessel} + f_{intensity}}{2}$$

$f_{vessel}$ is a score value corresponding to the number (not zero) of the blood vessel pixel points in a vascular distribution diagram in any window, and $f_{intensity}$ is a brightness score in any window. In the embodiment, in the fundus image, the darkest part corresponds to the brightness score in the formula, and the part not containing the blood vessels corresponds to the number score of the blood vessel pixel points in the formula.

In the embodiment, each pixel point in the candidate area is scanned by a sliding window with a size being the diameter of the optic disk/4*the diameter of the optic disk/4 (that is, (ODD/4)*(ODD/4)).

In the embodiment, $f_{vessel}$ is acquired by performing normalization processing on the maximum score in all the windows; and

$f_{intensity}$ is acquired by calculating a brightness average value of all the pixel points in the windows and performing normalization processing by 255.

An evaluation value of each sliding window is calculated, and a center pixel point corresponding to the sliding window with the minimum evaluation value is selected as the macular fovea; and a circle is delineated by taking the macular fovea as a circle center and the diameter of the optic disk as a diameter, and an area surrounded by the circle is set as a macular area.

The instruction set is further configured to perform: the"calculating a quantization parameter of a distance between the optic disk and the macular fovea"further includes the steps: according to the coordinates of the center of the optic disk and the coordinates of the macular fovea, whether the fundus image is a fundus image of a left eye or a right eye is determined; according to the coordinates of the center of the optic disk, the radius of the optic disk and the delineated edge of the optic disk, the coordinates of each point of the bitamporal edge of the optic disk as well as each pixel point in the area of the optic disk and a gravity center or a center point of the optic disk are acquired; according to a connecting line from the gravity center or center point of the optic disk to the coordinates of the center point of the macular fovea and the coordinates of bitamporal edge points of the optic disk on the line, an absolute distance between the bitamporal of the optic disk and the center of the macular fovea is calculated or acquired; and according to the absolute distance and a diameter of the optic disk, the quantization parameter is calculated.

a. According to the determined coordinates of the center of the optic disk and coordinates of the macular fovea, whether the fundus image is a fundus image of a left eye or a right eye is automatically determined according to the following:

$$flag = \begin{cases} 0, ODXX > MX; \\ 1, ODXX < MX; \end{cases}$$

Formula 1

wherein flag is a left eye/right eye marker, representing the right eye when it is 0 and representing the left eye when it is 1.

b. The coordinates (ODX, ODY) of the bitamporal of the optic disk are calculated according to the coordinates of the center of the optic disk and the radius of the optic disk; and an absolute distance between the bitamporal of the optic disk and the macular fovea is calculated according to the coordinates of the bitamporal of the optic disk and the coordinates of the macular fovea, and an Euclidean distance between the bitamporal of the optic disk and the macular fovea in the fundus image is calculated according to the following formula to serve as the absolute distance between the center of the optic disk and the macular fovea in the image:

$$OMD = \sqrt{\left| ODX - MX \right|^2 + \left| ODY - MY \right|^2}$$

Formula 2

wherein all coordinate values take the pixel of the upper left corner of the fundus image as an original point.

c. The distance between the macular fovea and the bitamporal edge of the optic disk is about 3 mm, so according to the acquired absolute distance between the bitamporal of the optic disk and the macular fovea, a standard d for the subsequent quantitative analysis is acquired according to the following formula:

$$d = DMD - ODD$$

Formula 3

In this embodiment, the acquired data is converted from an absolute representation mode into a relative representation mode by taking d as a ruler.

In the embodiment, if hard exudation has been detected and an Euclidean distance Di from each hard exudation to the macular fovea has been calculated, normalization processing may be performed according to the formula 1 at this time. Based on this, a standard minimum distance from the hard exudation to the macular fovea in the fundus image is acquired.

$$d_i' = \frac{d_i}{d}$$

Formula 4

Meanwhile, according to the personal information of the examinee of the previously acquired fundus image and the left and right eye information of the picture, the previous fundus image of the same eye of the examinee and the minimum distance from the corresponding hard exudation to the macular fovea may be acquired from the original fundus image, so that two successive examinations may be compared to make the screening determination result of macular edema.

The instruction set is further configured to perform: the first preset radius value is twice the radius of the optic disk, and the second preset radius value is three times the radius of the optic disk.

The position and the boundary point of the optic disk and the position of the center point of the macular fovea of the to-be-processed fundus image are determined by acquiring the to-be-processed fundus image by the storage device 200. The quantization parameter of the optic disk and the macular fovea is calculated. The quantization parameter includes the absolute distance between the bitamporal of the optic disk and the center of the macular fovea. Since the absolute distance value between the bitamporal of the optic disk and the center of the macular fovea of normal people is almost the same, the absolute distance value may be expressed quantitatively with mm number. Therefore, parameters of the subsequent quantitative analysis are acquired according to the acquired absolute distance between the bitamporal of the optic disk and the center of the macular fovea. The acquired data is converted from an absolute representation mode into a relative representation mode. meaningful and comparable data is formed through normalization processing. It is ensured that the fundus images from different sources (the fundus images of different people or the same person in different periods) may form meaningful and comparable quantitative indicators, so that all fundus images are basically comparable and are favorable for feature extraction and comparison of the fundus images acquired by examining different people at different times, even with different cameras, or the same person at different times, even with different cameras, thereby analyzing and determining fundus health through the quantitative indicators to realize quantitative analysis.

It should be noted that although the foregoing embodiments have been described in this article, the scope of patent protection of the present invention is not limited thereby. Therefore, based on the innovative concept of the present invention, changes and modifications to the embodiments described herein, or equivalent structures or equivalent process transformations made by using the description and drawings of the present invention, directly or indirectly apply the above technical solutions In other related technical fields, they are all included in the scope of patent protection of the present invention.

**Claims**

1. A preprocessing method for quantitative analysis of fundus image, wherein the step includes, acquiring a to-be-processed fundus image; performing optic disk positioning on the to-be-processed fundus image; performing macular fovea positioning on the to-be-processed image; and calculating a quantization parameter of a distance between a center of the macular fovea and a bitamporal edge of the optic disk.

2. A preprocessing method for quantitative analysis of fundus image according to claim 1,wherein the "performing optic disk positioning on the to-be-processed fundus image" further includes the steps: preprocessing the fundus image, wherein the preprocessing includes: green channel selection, median filtering, limited contrast enhancement and normalization processing of gray scale; extracting a binary vascular image from the preprocessed fundus image by an otsu algorithm and corroding the binary vascular image by a morphological method to obtain a main blood vessel; and performing parabolic fitting calculation on the main blood vessel, and positioning the center of the optic disk and delineating the edge of the optical disk according to the calculation result.

3. A preprocessing method for quantitative analysis of fundus image according to claim 2,wherein the "performing macular fovea positioning on the to-be-processed image" further includes the steps: constructing a circle by taking the center of the optic disk as the center of the circle and by using a preset radius value and a second preset radius value to form an annular area; and performing macular fovea positioning in the annular area according to the brightness feature of macula.

4. A preprocessing method for quantitative analysis of fundus image according to claim 2,wherein the "calculating a quantization parameter of a distance between a center of the macular fovea and a bitamporal edge of the optic disk"further includes the steps: according to the coordinates of the center of the optic disk and the coordinates of the macular fovea, determining whether the fundus image is a fundus image of a left eye or a right eye; according to the coordinates of the center of the optic disk, the radius of the optic disk and the delineated edge of the optic disk, acquiring the coordinates of each point of the bitamporal edge of the optic disk as well as each pixel point in the area of the optic disk and a gravity center or a center point of the optic disk; according to a connecting line from the gravity center or center point of the optic disk to the coordinates of the center point of the macular fovea and the coordinates of bitamporal edge points of the optic disk on the line, calculating or acquiring an absolute distance between the bitamporal of the optic disk and the center of the macular fovea; and according to the absolute distance and a diameter of the optic disk, calculating the quantization parameter.

5. A preprocessing method for quantitative analysis of fundus image according to claim 1,wherein the first preset radius value is twice the radius of the optic disk, and the second preset radius value is three times the radius of the optic disk.

6. A storage device stores an instruction set. The instruction set is configured to perform: acquiring a to-be-processed fundus image; performing optic disk positioning on the to-be-processed fundus image; performing macular fovea positioning on the to-be-processed image; and calculating a quantization parameter of a distance between a center of the macular fovea and a bitamporal edge of the optic disk.

7. A storage device according to claim 6,wherein the instruction set is further configured to perform: the"performing optic disk positioning on the to-be-processed fundus image" further includes the steps: preprocessing the fundus image, wherein the preprocessing includes: green channel selection, median filtering, limited contrast enhancement and normalization processing of gray scale; extracting a binary vascular image from the preprocessed fundus image by an otsu algorithm and corroding the binary vascular image by a morphological method to obtain a main blood vessel; and performing parabolic fitting calculation on the main blood vessel, and positioning the center of the optic disk and delineating the edge of the optical disk according to the calculation result.

8. A storage device according to claim 6,wherein the instruction set is further configured to perform: the "performing macular fovea positioning on the to-be-processed image" further includes the steps: constructing a circle by taking the center of the optic disk as the center of the circle and by using a preset radius value and a second preset radius value to form an annular area; and performing macular fovea positioning in the annular area according to the brightness feature of macula.

9. A storage device according to claim 7,wherein the instruction set is further configured to perform: the"calculating a quantization parameter of a distance between a center of the macular fovea and a bitamporal edge of the optic disk"further includes the steps: according to the coordinates of the center of the optic disk and the coordinates of the macular fovea, determining whether the fundus image is a fundus image of a left eye or a right eye; according to the coordinates of the center of the optic disk, the radius of the optic disk and the delineated edge of the optic disk, acquiring the coordinates of each point of the bitamporal edge of the optic disk as well as each pixel point in the area of the optic disk and a gravity center or a center point of the optic disk; according to a connecting line from the gravity center or center point of the optic disk to the coordinates of the center point of the macular fovea and the coordinates of bitamporal edge points of the optic disk on the line, calculating or acquiring an absolute distance between the bitamporal of the optic disk and the center of the macular fovea; and according to the absolute distance and a diameter of the optic disk, calculating the quantization parameter.

10. A storage device according to claim 6,wherein the instruction set is further configured to perform: the first preset radius value is twice the radius of the optic disk, and the second preset radius value is three times the radius of the optic disk.

acquiring a to-be-processed fundus image
S101

↓

performing optic disk positioning on the to-
be-processed fundus image
S102

↓

performing macular fovea positioning on the
to-be-processed image
S103

↓

calculating a quantization parameter of a
distance between a center of the macular fovea
and a bitamporal edge of the optic disk
S104

FIG.1

Storage device
200

FIG.2

**INTERNATIONAL SEARCH REPORT**

| International application No. |
| --- |
| **PCT/CN2018/117917** |

| A. | CLASSIFICATION OF SUBJECT MATTER |
| --- | --- |
| | G06T 7/60(2017.01)i |

According to International Patent Classification (IPC) or to both national classification and IPC

| B. | FIELDS SEARCHED |
| --- | --- |

Minimum documentation searched (classification system followed by classification symbols)

G06T A61B G06K

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 眼底, 图像, 视盘, 黄斑, 中心, 定位, 凹, 距离, 量化, 参数, fundus, macula, lutea, optic, disk, quantization, image, locate, distance, parameter

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 107292868 A (REDASEN TECHNOLOGY (DALIAN) CO., LTD.) 24 October 2017 (2017-10-24) <br> description, paragraphs [0029]-[0030] and [0213]-[0214] | 1-10 |
| A | CN 105411525 A (GUANGZHOU HEALGOO INTERACTIVE MEDICAL TECHNOLOGY CO., LTD.) 23 March 2016 (2016-03-23) <br> entire document | 1-10 |
| A | US 2008036965 A1 (KOWA COMPANY, LTD.) 14 February 2008 (2008-02-14) <br> entire document | 1-10 |

☐ Further documents are listed in the continuation of Box C.    ☑ See patent family annex.

| | |
| --- | --- |
| *   Special categories of cited documents: <br> "A"   document defining the general state of the art which is not considered to be of particular relevance <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
| --- | --- |
| **15 May 2019** | **30 May 2019** |

| Name and mailing address of the ISA/CN | Authorized officer |
| --- | --- |
| **State Intellectual Property Office of the P. R, China** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/117917**

| Patent document cited in search report | | | Publication date (day/month/year) | Patent family member(s) | | | Publication date (day/month/year) |
|---|---|---|---|---|---|---|---|
| CN | 107292868 | A | 24 October 2017 | None | | | |
| CN | 105411525 | A | 23 March 2016 | None | | | |
| US | 2008036965 | A1 | 14 February 2008 | JP | 2008036297 | A | 21 February 2008 |

Form PCT/ISA/210 (patent family annex) (January 2015)